# EUROPÄISCHE PATENTSCHRIFT

(11) **EP 3 763 972 B1**
(45) Veröffentlichungstag und Bekanntmachung des Hinweises auf die Patenterteilung: **29.03.2023**
(21) Anmeldenummer: 20184527.8
(22) Anmeldetag: 07.07.2020
(51) Int. Cl.: F16H 57/04, B60K 17/346, F16D 13/72, F16D 13/74

(54) **ANTRIEBSANORDNUNG MIT SCHMIERMITTELRESERVOIR**
DRIVE ASSEMBLY WITH LUBRICANT RESERVOIR
AGENCEMENT D'ENTRAÎNEMENT DOTÉ D'UN RÉSERVOIR DE LUBRIFIANT

(30) Priorität: 08.07.2019 DE 102019210037
(43) Veröffentlichungstag der Anmeldung: 13.01.2021
(73) Patentinhaber: GKN Automotive Limited, Birmingham, West Midlands B37 7YE (GB)
(72) Erfinder: HAUPT, Jan, 51515 Kürten (DE); GASSMANN, Theodor, 53721 Siegburg (DE); WERKHAUSEN, Maximilian, 50739 Köln (DE)
(74) Vertreter: Neumann Müller Oberwalleney Patentanwälte PartG mbB

(56) Entgegenhaltungen:
- DE-A1-102010 039 447
- DE-A1-102012 219 182
- DE-B3-102016 200 009
- KR-A- 20190 001 653
- US-A1- 2018 058 513

## Beschreibung

Die Erfindung betrifft eine Antriebsanordnung mit einem Getriebe und einer steuerbaren Kupplung und einem Beölungssystem, insbesondere für einen Antriebsstrang eines Kraftfahrzeugs. Antriebsanordnungen mit Getriebe und steuerbarer Kupplung werden in Antriebssträngen zur Leistungsübertragung zwischen mehreren Antriebskomponenten, wie Antriebswellen und/oder Antriebsrädern, eingesetzt. Sie ermöglichen das Übertragen von Drehbewegungen, eine variable Drehmomentübertragung, beziehungsweise das Schalten oder Abschalten von Antriebssträngen.

Derartige Antriebsanordnungen mit Kupplung werden beispielsweise in Antriebssträngen von mehrachsgetriebenen Kraftfahrzeugen eingesetzt, insbesondere Antriebssträngen mit einer permanent angetriebenen ersten Antriebsachse sowie einer optional zuschaltbaren zweiten Antriebsachse. Derartige Antriebskonzepte mit bedarfsweise zuschaltbarer Antriebsachse werden auch als "Hang-on", "On-demand" oder "Disconnect" -Systeme bezeichnet.

Aus der gattungsgemäßen DE 10 2012 219 182 A1 ist eine Verteilergetriebevorrichtung mit einem Differentialgetriebe und einem Schaltelement mit einem Kugelrampenmechanismus bekannt. Das Differentialgetriebe und das Schaltelement sind in voneinander durch ein Gehäuseteil getrennten Ölräumen angeordnet. In einem unteren Bereich der Vorrichtung ist eine durch das Gehäuseteil verlaufende Ölbohrung vorgesehen, der ein mit der Rampenscheibe gekoppelter Verschlussstopfen zugeordnet ist. Der Verschlussstopfen verschließt die Ölbohrung in geöffnetem Zustand des Schaltelements, und öffnet die Ölbohrung im geschlossenen Zustand des Schaltelements, so dass ein Austausch von Öl zwischen den Ölräumen vorliegt.

Aus der DE 10 2016 200 009 B3 ist eine Reibungskupplung mit einem Gehäuse bekannt, an dem außen ein Behälter zur Aufnahme von Kühlmedium für das Lamellenpaket angeordnet ist. Das Gehäuse hat einen Auslass, durch den Kühlmedium in den Behälter strömen kann, sowie einen Einlass, durch den Kühlmittel aus dem Behälter in das Gehäuse fließen kann. Im Einlass ist ein Ventil angeordnet. Bei nicht betätigter Reibungskupplung verschließt das Ventil den Einlass. Bei betätigter Reibungskupplung öffnet das Ventil den Einlass, so dass Kühlmittel aus dem Behälter in das Kupplungsgehäuse strömen kann.

Aus der US 2018/058513 A1 ist eine Fluidsteueranordnung bekannt, die Fluid zu einem Lamellenpaket steuert. Das Lamellenpaket kann von einer Aktoranordnung zwischen einem ausgerückten, einem Schlupf- und einem eingerückten Zustand bewegt werden. Ein von der Aktoranordnung betätigbares Sperrglied ist ausgebildet, den Fluidfluss zum Lamellenpaket zu verändern.

Aus der DE 10 2016 121 963 A1, entsprechend US 20170152936 A, ist ein Leistungsverzweigungsgetriebe mit einer Kupplung bekannt. Die Kupplung ist von einem Aktuator betätigbar und umfasst zwei Kupplungselemente, die miteinander in Eingriff bringbar sind. Ein Ventil ist mit dem Aktuator verbunden und bewirkt eine Schmiermittelzufuhr von einem Reservoir des Getriebes zur Kupplung, wenn die beiden Kupplungselemente miteinander in Eingriff sind.

Aus der KR 102019001653 A ist ein Hinterachsdifferential mit einer Kupplung bekannt. Die Fluidversorgung des Hinterachsdifferentials und der Kupplung erfolgt abhängig vom Fahrmodus des Fahrzeugs, wobei der Kupplung optional Schmiermittel zugeführt oder in der Kupplung enthaltenes Schmiermittel zur Verringerung des Schleppmoments abgeführt wird.

Aus der US 8 764 599 B2 ist eine Antriebsanordnung mit einer Kraftübertragungsvorrichtung zur Übertragung eines Antriebsmoments auf einen vorderen Antriebsstrang und einen hinteren Antriebsstrang bekannt. Der hintere Antriebsstrang umfasst eine Längsantriebswelle und eine hintere Winkeltriebanordnung mit einem Winkeltrieb und einem hiermit verbundenen Differential, das eine eingeleitete Drehbewegung auf zwei Seitenwellen überträgt. Zwischen dem Differential und einer der Seitenwellen ist eine Reibungskupplung vorgesehen, um Drehmoment wahlweise zu übertragen.

Aus der DE 10 2008 037 886 A1, entsprechend WO 2010/017882 A1, ist eine Antriebsanordnung für ein mehrachsgetriebenes Kraftfahrzeug mit einem permanent angetriebenen ersten Antriebsstrang und einem optional antreibbaren zweiten Antriebsstrang bekannt. Der optional antreibbare Antriebsstrang umfasst eine erste Kupplung, die im Leistungspfad vor, und eine zweite Kupplung, die im Leistungspfad hinter der Längsantriebswelle angeordnet ist. Durch Öffnen der ersten und zweiten Kupplung kann die Längsantriebswelle drehmomentfrei geschaltet werden.

Aus der EP 3 354 920 A1 ist eine Kupplungsanordnung mit einer Reiblamellenkupplung für den Antriebsstrang eines Kraftfahrzeugs bekannt, die einen Innenlamellenträger, einen Außenlamellenträger und ein Lamellenpaket aufweist. Der Innenlamellenträger hat im Überdeckungsbereich mit dem Lamellenpaket Bohrungen, durch die Öl zum Lamellenpaket fließen kann. Die Mündungen der Bohrungen werden jeweils von Blendenabschnitten eines bewegbaren Stellglieds verdeckt. Das Lamellenpaket ist von einer axial beweglichen Druckplatte beaufschlagbar und gegen eine Stützplatte axial abgestützt. Die Druckplatte ist von einer Betätigungseinrichtung bewegbar, die auf das Stellglied einwirkt, um den Ölvolumenstrom durch die Bohrungen zu steuern.

Generell ist eine ausreichende Ölversorgung von Getriebeeinheiten und Reiblamellenkupplungen von Wichtigkeit, um relativ zueinander drehende Bauteile ausreichend zu schmieren und aufgrund von Reibung entstehende Wärme abzuführen. Auf der anderen Seite führt ein hoher Ölvolumenstrom zu Schleppmomenten und damit zu ungewünschten Verlusten. Durch Planschverluste wird die Effizienz von Getrieben negativ beeinflusst. Aktive Beölungssysteme wie Trockensumpfschmierungen mittels einer Ölpumpe können diesen Effekt verhindern, bedürfen aber eines erhöhten Aufwands, wie zusätzlicher Komponenten und Regelungstechnik.

Der vorliegenden Erfindung liegt als Aufgabe zugrunde, eine Antriebsanordnung mit einem Getriebe und einer Kupplung vorzuschlagen, die eine Anpassung der Ölversorgung an den Bedarf ermöglicht und eine hohe Effizienz beziehungsweise geringe Leistungsverluste hat.

Zur Lösung wird eine Antriebsanordnung für einen Antriebsstrang eines Kraftfahrzeugs vorgeschlagen, umfassend: ein Getriebe; eine Kupplung, die mit dem Getriebe antriebsverbunden ist und zur variablen Drehmomentübertragung zwischen einem Kupplungseingangsteil und einem Kupplungsausgangsteil gestaltet ist; einen Aktuator zur Steuerung der Kupplung, wobei der Aktuator ein Betätigungselement aufweist, das auf die Kupplung zur Einstellung des übertragbaren Drehmoments einwirkt; ein Gehäuse mit einem Getriebegehäuseraum, in dem zumindest ein Teil des Getriebes aufgenommen ist, einem Reservoir zum Zwischenspeichern von Schmiermittel und einem Kupplungsgehäuseraum, in dem zumindest ein Teil der Kupplung aufgenommen ist, wobei der Getriebegehäuseraum und optional der Kupplungsgehäuseraum mit dem Reservoir fluidisch verbunden ist, so dass bei Betrieb aufgrund von Drehbewegung Schmiermittel von einem drehenden Bauteil des Getriebes von dem Getriebegehäuseraum in das Reservoir gefördert wird; und ein Ventil zur Steuerung eines Schmiermittelstroms von dem Reservoir zum Getriebegehäuseraum und/oder dem Kupplungsgehäuseraum, wobei das Ventil mit dem Betätigungselement des Aktuators derart wirkverbunden ist, dass das Ventil bei im Schließsinn betätigter Kupplung geöffnet ist, so dass Schmiermittel vom Reservoir zum Gehäuseraum fließt, und bei unbetätigter Kupplung geschlossen ist, so dass Schmiermittel im Reservoir gespeichert wird und die im Getriebegehäuseraum zirkulierende Schmiermittelmenge reduziert wird, wobei das Ventil ein von dem Kupplungsaktuator verstellbares Stellglied aufweist, das mittels einer Feder gegen das Betätigungselement des Aktuators vorgespannt ist, wobei das Betätigungselement das Stellglied beim Schließen der Kupplung freigibt, so dass das Stellglied von der Feder in die Offenstellung überführt und eine Fluidverbindung geöffnet wird.

Ein Vorteil der Antriebsanordnung ist, dass das Reservoir zusammen mit dem steuerbaren Zufluss zum Getrieberaum und/oder Kupplungsraum eine Anpassung der ÖIversorgung an den Bedarf ermöglicht. In abgeschaltetem, das heißt geöffnetem Zustand der Kupplung wird ein Teil des Schmiermittels in dem Reservoir zwischengespeichert, so dass die im Getriebe zirkulierende Schmiermittelmenge und damit auch die Planschverluste reduziert sind. Auf diese Weise werden eine hohe Effizienz beziehungsweise geringe Leistungsverluste der Antriebsanordnung erreicht. Das Befüllen des Reservoirs erfolgt durch ein oder mehrere drehende Bauteile des Getriebes, beispielsweise ein Zahnrad, und/oder der zumindest einen Kupplung, beispielsweise ein Lamellenträger. Bei Betrieb der Antriebsanordnung drehen Getriebeteile und Kupplungsteile in ihrem jeweiligen Gehäuseraum und nehmen aufgrund der Drehbewegung Schmiermittel mit und fördern beziehungsweise schleudern dies in Richtung Reservoir. Im Reservoir wird das Schmiermittel zwischengespeichert und gelangt bei geöffnetem Ventil wieder zurück in den Kreislauf. Bevorzugte Ausführungsformen sind in den abhängigen Ansprüchen definiert.

Für die Anordnung des Ventils und die fluidische Rückfluss-Verbindung zwischen Reservoir und Getriebegehäuseraum beziehungsweise Kupplungsgehäuseraum sind - je nach Ausgestaltung der einzelnen Komponenten - mehrere Möglichkeiten denkbar. Nach einer ersten Möglichkeit kann das Reservoir nur mit dem Getriebegehäuseraum fluidisch verbunden sein, während der Kupplungsgehäuseraum hiervon fluidisch getrennt ist. Bei dieser Ausführung führt ein Schließen der Kupplung zur Freigabe der im Reservoir zwischengespeicherten Schmiermittelmenge für die Schmierung des Getriebes. Eine Schmiermittelversorgung der Kupplung bleibt hiervon unberührt. Diese Ausführung ist beispielsweise denkbar bei Ausführungen, bei denen das Getriebe und die Kupplung separate Schmiermittel verwenden oder bei denen die Kupplung als trocken laufende Kupplung gestaltet ist. Gemäß einer nicht erfindungsgemäßen zweiten Möglichkeit kann das Reservoir nur mit dem Kupplungsgehäuseraum fluidisch verbunden sein, während der Getriebegehäuseraum hiervon fluidisch getrennt ist. Bei dieser Ausführung führt ein Schließen der Kupplung zur Freigabe der im Reservoir zwischengespeicherten Schmiermittelmenge für die Schmierung der Kupplung, wobei die Schmiermittelversorgung beziehungsweise Schmiermittelmenge des Getriebes hiervon unberührt bleibt. Bei betätigter Kupplung, das heißt im Drehmomentübertragungszustand, steht die volle Schmiermittelmenge zur Verfügung, während im unbetätigten Zustand Schmiermittel im Reservoir zwischengespeichert wird. Diese Ausführung eignet sich insbesondere für nasslaufende Kupplungen, um Schleppverluste in abgeschaltetem Zustand zu vermindern. Nach einer dritten Möglichkeit, welche eine Kombination der ersten und zweiten Möglichkeit darstellt, kann das Reservoir sowohl mit dem Kupplungsgehäuseraum als auch mit dem Getriebegehäuseraum fluidisch verbunden sein. Bei dieser Ausführung führt ein Schließen der Kupplung zur Freigabe der im Reservoir zwischengespeicherten Schmiermittelmenge für die Schmierung der Kupplung und des Getriebes. Im Drehmomentübertragungszustand steht somit die volle Schmiermittelmenge im Getriebe und der Kupplung zur Verfügung, während im unbetätigten Zustand Schmiermittel im Reservoir zwischengespeichert wird.

Bei der zweiten und dritten Möglichkeit ist das Reservoir mit dem Kupplungsgehäuseraum fluidisch verbunden, so dass Schmiermittel vom Reservoir zum Kupplungsgehäuseraum fließen kann. Die Kammern, durch welche das Schmiermittel zirkuliert, können in Reihe anordnet sein. Eine erste Kammer ist in dem Gehäuseabschnitt gebildet, in dem das Getriebe aufgenommen ist. Eine zweite Kammer bildet das Reservoir, und eine dritte Kammer ist in dem Gehäuseabschnitt gebildet, in dem die Kupplung aufgenommen ist. Die Kammern sind miteinander fluidisch verbunden, so dass sich bei Betrieb ein Schmiermittelfluss von der ersten Kammer zur zweiten Kammer und - bei betätigter Kupplung - zur dritten Kammer einstellt.

Ein besonderes Merkmal des Beölungskonzepts ist, dass der Schmiermittelfluss zum Getriebe und/oder zur Kupplung über das Ventil gesteuert wird, das durch die Bewegung des Kupplungsaktuators aktiviert wird. Bei aktiver Kupplung, das heißt, wenn diese ein Drehmoment überträgt, wird das Ventil geöffnet und der Ölfluss zur Getriebeund/oder Kupplungskammer wird freigegeben. Es steht somit das volle Schmiermittelvolumen zur Schmierung beziehungsweise Kühlung der drehenden Komponenten zur Verfügung. Bei inaktiver Kupplung, das heißt wenn diese geöffnet ist und kein Drehmoment überträgt, ist das Ventil geschlossen, so dass der Rückfluss des Schmiermittels unterbrochen ist und sich das Reservoir mit Schmiermittel füllt. Dadurch sinkt der Schmiermittelpegel in der Getriebekammer beziehungsweise Kupplungskammer stetig, so dass die Planschverluste verringert werden.

Nach einer möglichen Ausgestaltung ist das Volumen des Reservoirs so groß, dass es mindestens 25 % des gesamten Schmiermittelvolumens der Antriebsanordnung zwischenspeichern kann, insbesondere mindestens 35 %, vorzugsweise mindestens 45 % oder mehr zwischenspeichern kann. Hierdurch kann, wenn die Kupplung geöffnet ist, die Schmiermittelmenge für das Getriebe und entsprechend die Planschverluste deutlich reduziert werden. Die Obergrenze hängt davon ab, wieviel Schmiermittel zur ausreichenden Kühlung und Schmierung bei geöffneter Kupplung erforderlich ist, und kann beispielsweise maximal 85 %, insbesondere maximal 75 % oder auch maximal 65 % des gesamten Schmiermittelvolumens betragen.

Eine hier offenbarte Antriebsanordnung kann an beliebiger Stelle im Antriebsstrang eines Kraftfahrzeugs im Leistungspfad zwischen einer Antriebsquelle und den Rädern angeordnet sein. Beispielsweise kann die Antriebsanordnung zumindest ein Getriebe aus der Gruppe Übersetzungsgetriebe, Winkelgetriebe, Verteilergetriebe (PTU) und Differentialgetriebe umfassen. Ferner kann die Antriebsanordnung im Leistungspfad vor oder hinter einer Längsantriebswelle angeordnet sein.

Das in der Antriebsanordnung befindliche Öl dient zur Abfuhr der durch die Reibung entstehenden Wärme sowie zur Schmierung der miteinander in Reibkontakt kommenden Bauteile. Insofern kann das Öl auch als Kühl- beziehungsweise Schmiermittel bezeichnet werden.

Nach einer Ausführungsform kann das Ventil in einer Verbindungsleitung zwischen dem Schmiermittelreservoir und dem Kupplungsgehäuse beziehungsweise dem Getriebegehäuse angeordnet sein. Die Leitung verbindet das Reservoir fluidisch mit dem Kupplungsraum beziehungsweise dem Getrieberaum und kann insofern auch als Fluidverbindung bezeichnet werden. Das Ventil weist ein Stellglied auf, das von dem Kupplungsaktuator zumindest mittelbar verstellbar ist. Wenn der Kupplungsaktuator betätigt wird, um die Kupplung zu schließen beziehungsweise in einem Drehmomentübertragungsmodus zu steuern, wird das Stellglied im Öffnungssinn bewegt, um die Fluidverbindung freizugeben. Hierfür ist eine Feder vorgesehen, welche das Stellglied gegen das Betätigungselement im Öffnungssinn vorspannt. Durch Betätigen des Aktuators zum Schließen der Kupplung gibt das Betätigungselement das Stellglied frei, so dass dieses von der Feder in die Offenstellung bewegt wird. Die Fluidverbindung ist geöffnet, so dass Schmiermittel vom Reservoir zum Kupplungs- beziehungsweise Getrieberaum gelangt. Durch Betätigen des Aktuators zum Öffnen der Kupplung bewegt das Betätigungselement das Stellglied entgegen der Federkraft wieder in die Schließstellung, so dass Schmiermittel im Reservoir gespeichert wird.

Ein Verbindungskanal kann zwischen dem Getriebegehäuse und dem Reservoir vorgesehen sein, wobei im Betriebszustand des Getriebes die Mündung des Verbindungskanals in das Reservoir auf einem höheren Niveau liegt, als die Mündung der Verbindungsleitung aus dem Reservoir zum Kupplungsraum. Ferner kann das Reservoir im Einbauzustand höher angeordnet sein, als ein Schmiermittelsumpf des Getriebes.

Nach einer Ausgestaltung kann eine Rückflussleitung vom Reservoir zum Getriebe vorgesehen sein, die zumindest indirekt mit dem Kupplungs-Zufluss fluidisch verbunden beziehungsweise abhängig hiervon ist. Das bedeutet, dass bei geöffnetem Kupplungs-Zufluss entsprechend auch eine Schmiermittel-Teilmenge durch den Getriebe-Rückfluss unmittelbar zum Getriebe zurückfließt.

Das Getriebe der Antriebsanordnung kann insbesondere einen Winkeltrieb mit einem drehend antreibbaren Ritzel und einem hiermit kämmenden Ringrad umfassen, das beispielsweise als Tellerrad gestaltet sein kann. Das Ringrad ist in dem Getriebegehäuse um eine Drehachse drehbar gelagert, wobei in dem Getriebegehäuseraum eine Auffangeinrichtung vorgesehen sein kann, um vom Ringrad abgeschleudertes Schmiermittel aufzufangen und dem Verbindungskanal zum Reservoir zuzuführen.

Die Antriebsanordnung weist ein Gehäuse mit mehreren Gehäuseabschnitten auf. Dabei können der erste Gehäuseraum zur Aufnahme des Getriebes beziehungsweise Teilen davon, und der zweite Gehäuseraum zur Aufnahme der Kupplung beziehungsweise Teilen davon durch eine Zwischenwand mit einer Durchtrittsöffnung voneinander getrennt sein. Durch die Öffnung kann sich eine Zwischenwelle hindurcherstrecken, die das Getriebe mit der Kupplung antriebsmäßig verbindet. Die Zwischenwelle kann in der Zwischenwand mittels eines Wellenlagers drehbar gelagert sein, und das Ringrad kann in der Zwischenwand mittels eines weiteren Lagers drehbar gelagert sein. Dabei können die beiden Lager auf unterschiedlichen Seiten der Zwischenwand angeordnet sein. Die Fluidverbindung vom Reservoir zum Kupplungsgehäuseraum mündet vorzugsweise in einem Ringabschnitt der Zwischenwand, und zwar axial benachbart zu einer Schulter auf der dem Kupplungsgehäuseraum zugewandten Seite.

Der Kupplungsaktuator kann koaxial zur Zwischenwelle, insbesondere axial zwischen der Zwischenwand und der Kupplung angeordnet sein. Vorzugsweise umfasst der Aktuator einen steuerbaren Aktuatorantrieb und ein hiervon bewegbares Betätigungselement, das beim Bewegen zum Schließen der Kupplung das Stellglied des Ventils öffnet.

Der Aktuator ist ausgestaltet beziehungsweise steuerbar, um die Kupplung zu schlie-ßen, so dass Drehmoment zwischen einem Kupplungseingang und Kupplungsausgang übertragen wird, oder zu öffnen, so dass die Kupplungsteile voneinander entkoppelt sind und kein Drehmoment übertragen. Zum Steuern im Schließsinn beziehungsweise im Öffnungssinn kann beispielsweise ein Drehantrieb mit einem Rotations-Translations-Wandler vorgesehen sein, so dass eine Drehbewegung in einer ersten Drehrichtung ein Beaufschlagen eines Kupplungs-Druckelements und damit ein Schließen der Kupplung bewirkt, während eine Drehbewegung in einer zweiten Drehrichtung ein Abrücken des Kupplungs-Druckelements und damit ein Öffnen der Kupplung bewirkt. Der Aktuator kann prinzipiell beliebig gestaltet sein, beispielsweise elektromotorisch, elektromagnetisch oder hydraulisch.

Nach einer möglichen konkreten Ausgestaltung umfasst der Aktuator einen Rampenmechanismus mit einem Stützring, der gegen ein ortsfestes Bauteil axial abgestützt ist, und einem Stellring, der axial verschiebbar ist, sowie eine Antriebseinheit zum Verdrehen eines von dem Stützring und dem Stellring relativ zum anderen von dem Stützring und dem Stellring. Der Stützring und/oder der Stellring weisen eine Rampenstruktur auf, so dass eine Drehbewegung der Antriebseinheit in eine Axialbewegung des Stellrings umgewandelt wird. In weiterer Konkretisierung kann der Rampenmechanismus als Kugelrampenmechanismus gestaltet sein, wobei die beiden Ringe auf ihren einander zugewandten Stirnflächen jeweils eine Mehrzahl von in Umfangsrichtung verlaufenden Kugelrillen mit einer variablen Tiefe aufweisen. In Paaren von einander gegenüberliegenden Kugelrillen ist jeweils eine Kugel aufgenommen, über die sich die beiden Ringe aneinander abstützen. Durch entsprechendes Verdrehen des einen Rings relativ zum anderen Ring wandern die Kugeln in flachere oder tiefere Rillenbereiche, so dass die axiale Position des Kupplungs-Druckelements und damit das übertragbare Drehmoment der Kupplung entsprechend nach Bedarf eingestellt werden kann. Zum Verdrehen eines der Ringe relativ zur anderen kann beispielsweise ein Elektromotor vorgesehen sein, welcher mit einem Ritzel in eine Zahnstruktur an einer Außenfläche des drehbaren Rings eingreift.

Nach einer möglichen Ausführungsform ist der vom Aktuatorantrieb drehend antreibbare Ring das mit dem Stellglied des Ventils zusammenwirkende Betätigungselement. Insofern hat der Aktuator eine Doppelfunktion, nämlich die Betätigung der Kupplung einerseits und die Steuerung der zirkulierenden Ölmenge beziehungsweise der Ölversorgung des Getriebes und der Kupplung andererseits. Bei Betätigung der Kupplung im Schließsinn wird gleichzeitig auch das Ventil-Stellglied bewegt, wobei der Zufluss vom Zwischenreservoir zum Kupplungsraum geöffnet wird. Dementsprechend steht in Betriebszuständen, in denen die Kupplung in Eingriff ist, insbesondere unter Schlupf Drehmoment überträgt, der maximale Ölvolumenstrom zur Verfügung. Die drehenden Kupplungsteile werden gut geschmiert beziehungsweise hierin entstehende Wärme wird über den erhöhten Ölvolumenstrom effektiv abgeführt.

Zum Bewegen des Ventil-Stellglieds kann das Aktuator-Betätigungselement eine Stellkontur aufweisen, die so gestaltet ist, dass ein Bewegen des Betätigungselements zum Schließen der Kupplung ein Bewegen des Stellglieds zum Öffnen des Ventils bewirkt. Bei Ausgestaltung des Aktuators als Kugelrampenanordnung ist das Betätigungselement ein Betätigungsring, der an einer Stirnseite die in Umfangsrichtung verlaufenden Kugelrillen mit variabler Tiefe aufweist und der an einer Umfangsfläche die Stellkontur mit einem veränderlichen Radius über dem Umfang aufweist. So bewirkt ein Verdrehen des Betätigungsrings ein Öffnen des Ventils und ein Schließen der Kupplung. Nach einer weiteren beispielhaften Ausgestaltung kann auch ein hydraulischer Aktuator verwendet werden, der mit einem kleinen ersten Kolben das Ventil für die Beölung betätigt und, bei größeren hydraulischen Drücken, mit einem zweiten Kolben die Kupplung beaufschlagt.

Die Antriebsanordnung kann ferner ein Differentialgetriebe umfassen, das in dem Getriebegehäuseraum angeordnet sein kann. Das Differentialgetriebe ist ausgestaltet, um ein von der vorgelagerten Getriebeeinheit eingeleitetes Drehmoment auf zwei Ausgangsteile aufzuteilen. Hierfür umfasst das Differentialgetriebe einen Differentialkorb, der mit dem Ringrad des Winkeltriebs verbunden ist und in dem Getriebegehäuse um die Drehachse drehbar gelagert ist, mehrere Differentialräder, die in dem Differentialkorb drehbar gelagert sind und gemeinsam mit diesem um die Drehachse umlaufen, sowie zwei Seitenwellenräder, die jeweils koaxial zur Drehachse angeordnet sind und mit den Differentialrädern in Verzahnungseingriff sind.

Anstelle eines Differentialgetriebes kann die Antriebsanordnung nach einer alternativen Ausführungsform auch eine zweite Kupplung aufweisen, die mit dem Getriebe antriebsverbunden ist. Bei dieser Ausführungsform treibt ein Getriebeausgangsteil die Kupplungseingangsteile der ersten und der zweiten Kupplung an. Bei der Ausführung mit zwei Kupplungen, die auch als Twinster bezeichnet werden kann, ist zur Steuerung der zweiten Kupplung ein zweiter Aktuator vorgesehen. Der erste Aktuator für die erste Kupplung und der zweite Aktuator für die zweite Kupplung sind separat steuerbar, so dass das auf die jeweilige Seitenwelle übertragbare Drehmoment individuell eingestellt werden kann. Die zweite Kupplung und der zweite Aktuator können hinsichtlich Aufbau und Funktionsweise so gestaltet sein wie die erste Kupplung beziehungsweise der erste Aktuator. Das heißt, alle vorliegend für eine der genannten Komponenten beschriebenen Merkmale können analog auch für die zweite Komponente gelten.

Die erste und/oder zweite Kupplung ist vorzugsweise als nasslaufende Reiblamellenkupplung gestaltet, und umfasst einen Innenlamellenträger, mit dem Innenlamellen drehfest und axial beweglich verbunden sind, und einen Außenlamellenträger, mit dem Außenlamellen drehfest und axial beweglich verbunden sind. Die Innenlamellen und die Außenlamellen bilden gemeinsam ein Lamellenpaket, das bei axialer Druckbeaufschlagung Drehmoment zwischen den Lamellenträgern überträgt.

Das vom Zwischenreservoir in den Kupplungsraum einströmende Öl kann durch Bohrungen in einem der Lamellenträger zum Lamellenpaket gelangen, um dieses zu kühlen beziehungsweise zu schmieren. Von dem Kupplungsraum kann das Öl durch die in der Zwischenwand vorgesehene Durchgangsbohrung wieder zurück in den Getrieberaum gelangen. Es versteht sich, dass das strömende Öl auch andere bewegbare mechanischen Bauteile wie Lager oder Dichtungen kühlen und schmieren kann.

Bevorzugte Ausführungsformen werden nachstehend anhand der Zeichnungsfiguren erläutert. Hierin zeigt:
- Figur 1A: eine erfindungsgemäße Antriebsanordnung in perspektivischer Ansicht;
- Figur 1B: die Antriebsanordnung aus Figur 1A in einem Längsschnitt;
- Figur 1C: die Anordnung der Schmiermittelkammern der Antriebsanordnung aus Figur 1A in perspektivischer Ansicht;
- Figur 1D: die Antriebsanordnung aus Figur 1A in einem Schnitt durch das Reservoir;
- Figur 1E: ein Detail der Schnittdarstellung aus Figur 1D in vergrößerter Darstellung;
- Figur 1F: die Antriebsanordnung aus Figur 1A in einem weiteren Längsschnitt;
- Figur 1G: ein Detail der Schnittdarstellung aus Figur 1F in vergrößerter Darstellung;
- Figur 1H: die Anordnung aus Figur 1G im Querschnitt gemäß Schnittlinie H-H;
- Figur 2A: die Anordnung aus Figur 1H in vereinfachter Darstellung mit geschlossenem Ventil;
- Figur 2B: die Anordnung aus Figur 1H in vereinfachter Darstellung mit geöffnetem Ventil;
- Figur 3: ein weiteres Detail der Antriebsanordnung aus Figur 1A in Schnittdarstellung;
- Figur 4: ein weiteres Detail der Antriebsanordnung aus Figur 1A in Schnittdarstellung;
- Figur 5A: einen Teilbereich der Antriebsanordnung aus Figur 1A in perspektivischer Schnittdarstellung;
- Figur 5B: ein Detail aus Figur 5A in vergrößerter Schnittdarstellung;
- Figur 6A: die Antriebsanordnung aus Figur 1A in einer weiteren perspektivischen Schnittdarstellung;
- Figur 6B: ein Detail aus Figur 6A in vergrößerter Schnittdarstellung;
- Figur 7: einen Antriebsstrang mit Antriebsanordnung gemäß den Figuren 1 bis 6 in schematischer Darstellung; und
- Figur 8: eine erfindungsgemäße Antriebsanordnung in schematischer Darstellung in einer zweiten Ausführungsform.

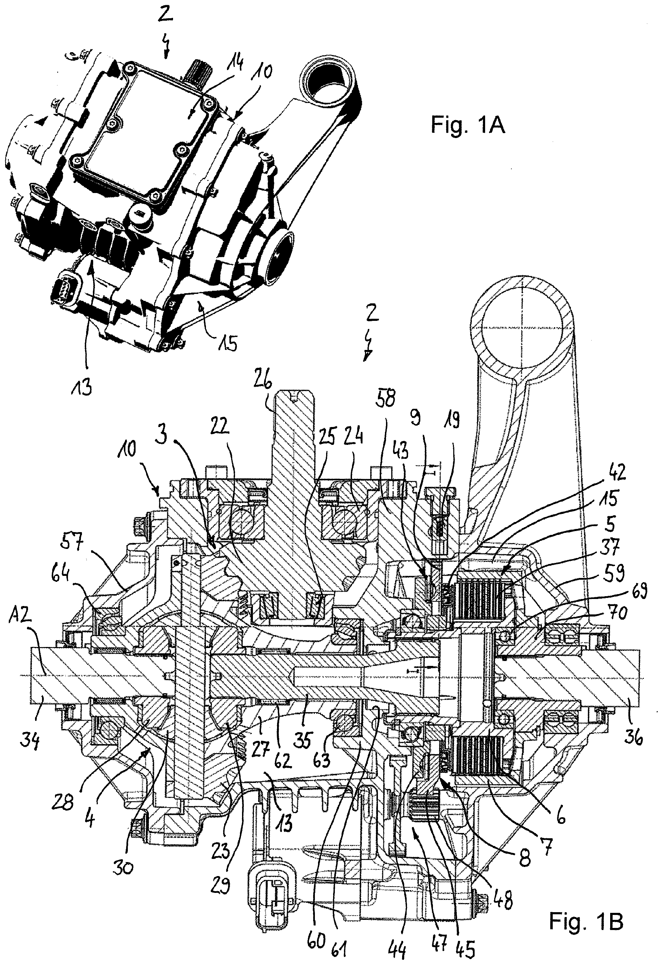

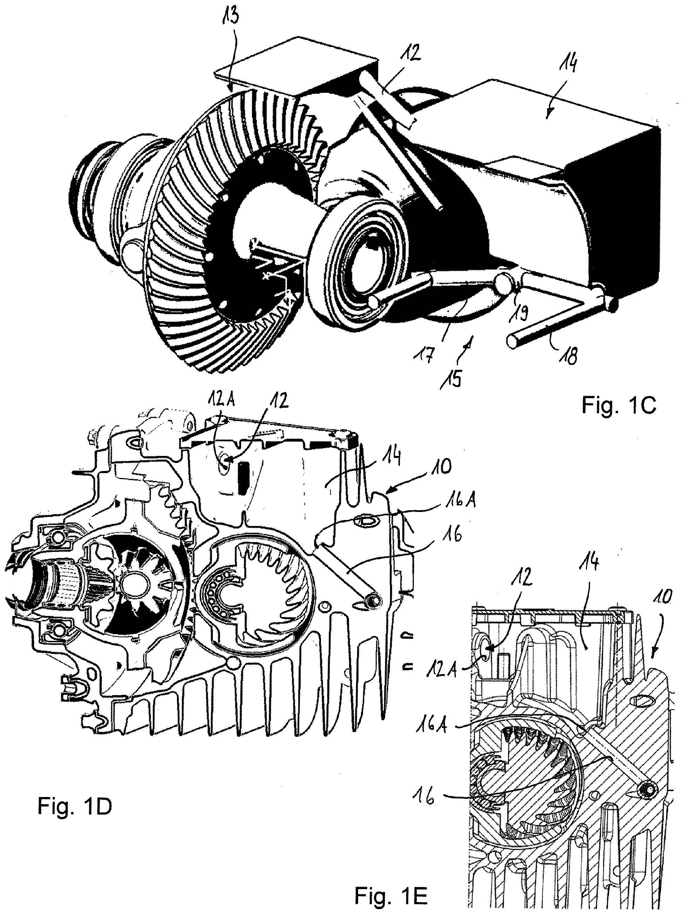

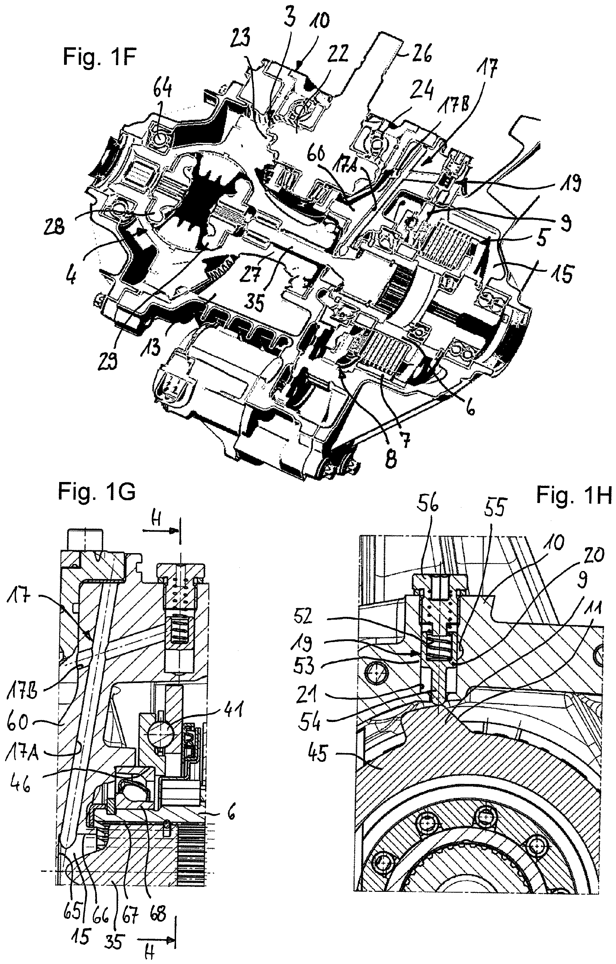

Die Figuren 1 bis 6, welche nachstehend gemeinsam beschrieben werden, zeigen eine erfindungsgemäße Antriebsanordnung 2 für einen Antriebsstrang eines Kraftfahrzeugs. Die Antriebsanordnung 2 umfasst vorliegend ein erstes Getriebe 3, das insbesondere in Form eines Winkeltriebs gestaltet ist, ein im Leistungspfad nachgelagertes zweites Getriebe 4, das optional ist und vorliegend in Form eines Differentialgetriebes gestaltet ist, und eine Kupplung 5, die mit dem ersten beziehungsweise zweiten Getriebe antriebsverbunden ist und zur variablen Drehmomentübertragung zwischen einem Kupplungseingangsteil 6 und einem Kupplungsausgangsteil 7 gestaltet ist. Zur Steuerung der Kupplung 5 ist ein Aktuator 8 mit einem Betätigungselement 9 vorgesehen, das auf die Kupplung 5 zur Einstellung des zwischen den Kupplungsteilen 6, 7 übertragbaren Drehmoments einwirkt.

Die Antriebsanordnung 2 umfasst ferner ein Gehäuse 10 mit einem Getriebegehäuseraum 13, in dem das erste Getriebe 3 beziehungsweise Teile davon aufgenommen ist, einem Reservoir 14 und einem Kupplungsgehäuseraum 15, in dem die Kupplung 5 aufgenommen ist. Der Getriebegehäuseraum 13 ist mit dem Reservoir 14 fluidisch verbunden, insbesondere über einen Fluidkanal 12, so dass bei Betrieb Schmiermittel von dem Getriebegehäuseraum 13 in das Reservoir 14 gefördert wird. Das Schmiermittelreservoir 14 ist mit dem Kupplungsgehäuseraum 15 fluidisch verbunden ist, insbesondere über ein oder mehrere weitere Fluidkanäle 16, 17, 18, so dass Schmiermittel vom Reservoir 14 zum Kupplungsgehäuseraum 15 fließen kann. Das Reservoir 14 kann so gestaltet sein, dass es mindestens 25 % des gesamten Schmiermittels, beispielsweise etwa 50 % des gesamten Schmiermittels, zwischenspeichern kann.

In dem Gehäuse 10 der Antriebsanordnung 2 ist Öl vorgesehen, das zur Abfuhr der durch die Reibung entstehenden Wärme sowie zur Schmierung der miteinander in Reibkontakt kommenden Bauteile dient. Zur Steuerung des Schmiermittelstroms vom Reservoir 14 zum Kupplungsgehäuseraum 15 ist ein schaltbares Ventil 19 vorgesehen. Das Ventil 19 ist mit dem Betätigungselement 9 des Aktuators 8 derart wirkverbunden, dass das Ventil bei geschlossener Kupplung 5 geöffnet ist, so dass Schmiermittel vom Reservoir 14 zum Kupplungsgehäuseraum 15 fließt, und bei geöffneter Kupplung 5 geschlossen ist, so dass Schmiermittel im Reservoir 14 temporär gespeichert wird.

Wie insbesondere in Figur 1C erkennbar, sind die Kammern 13, 14, 15 in Reihe angeordnet und miteinander hydraulisch verbunden, so dass sich bei Betrieb ein Schmiermittelfluss von der ersten Kammer 13 zur zweiten Kammer 14 und - bei betätigter Kupplung 5 - zur dritten Kammer 15 einstellt. Dabei wird der Schmiermittelfluss zur Kupplung 5 über das Ventil 19 gesteuert, das durch die Bewegung des Kupplungsaktuators 8 betätigt wird. Bei aktiver Kupplung 5, das heißt, wenn diese ein Drehmoment überträgt, wird das Ventil 19 geöffnet und der Ölfluss zur Kupplungskammer 15 wird freigegeben. Es steht somit das volle Schmiermittelvolumen zur Schmierung beziehungsweise Kühlung der drehenden Komponenten zur Verfügung. Bei inaktiver Kupplung 5, das hei ßt wenn diese geöffnet ist und kein Drehmoment überträgt, ist das Ventil 19 geschlossen, so dass der Rückfluss des Schmiermittels unterbrochen ist und sich das Reservoir 14 mit Schmiermittel füllt. Dadurch sinkt der Schmiermittelpegel in der Getriebekammer 13 stetig, so dass die Planschverluste gering sind.

Das erste Getriebe 3 umfasst ein erstes Zahnrad 22 und ein zweites Zahnrad 23, die miteinander in Verzahnungseingriff sind. Bei der vorliegenden Ausgestaltung als Winkeltrieb ist das erste Zahnrad 22 als Ritzel und das zweite Zahnrad 23 als Tellerrad gestaltet. Das erste Zahnrad 22 kann einstückig mit einem Wellenzapfen ausgestaltet und mittels eines oder mehrerer Lager 24, 25 im Gehäuse 10 um eine Drehachse drehbar gelagert sein. Drehmoment kann über eine Wellenverzahnung 26 (splines) am Ende des Zapfens eingeleitet werden, beispielsweise von einem Antriebsstrang, der von einer elektrischen Maschine oder einer Verbrennungskraftmaschine antreibbar ist.

Das zweite Zahnrad 23 ist mit dem Eingangsteil 27 des Differentialgetriebes 4 fest verbunden, beispielsweise über eine Schraub- und/oder Schweißverbindung. Das Differentialgetriebe 4 verteilt ein vom zweiten Zahnrad 23 in das Eingangsteil 27 eingeleitetes Antriebsmoment gleichmäßig auf zwei Ausgangsteile 28, 29. Das Differentialgetriebe 4 umfasst einen Differentialkorb 27 als Eingangsteil, mehrere Differentialräder 30, die gemeinsam mit dem Differentialkorb 27 um die Drehachse A2 umlaufen, sowie zwei Seitenwellenräder als Ausgangsteile 28, 29, die mit den Differentialrädern in Verzahnungseingriff sind und im Differentialkorb koaxial zur Drehachse A2 drehbar aufgenommen sind. Das linke Seitenwellenrad 28 ist mit einer linken Seitenwelle 34 zur Drehmomentübertragung verbunden. Das rechte Seitenwellenrad 29 ist über eine Zwischenwelle 35 und die Kupplung 5 mit einer rechten Welle 36 zur Drehmomentübertragung verbunden. Die äußeren Enden der Wellen 34, 36 können über Seitenwellen mit Fahrzeugrädern verbunden sein, um auf diese ein Drehmoment zu übertragen.

Es ist insbesondere in Figur 1B erkennbar, dass die steuerbare Kupplung 5 im Leistungspfad zwischen dem Differentialgetriebe 4 und dem Wellenteil 36 angeordnet ist. Eine erste Funktion der Kupplung 5 ist, dass diese das Antriebsmoment zum Antreiben der Antriebsachse eingestellt werden kann, insbesondere variabel in Abhängigkeit vom ermittelten Bedarf (Solldrehmoment). Ferner können die Wellen 34, 36 beziehungsweise die zugehörige Antriebsachse einerseits und die Antriebsquelle andererseits mittels der Kupplung 5 bedarfsweise miteinander verbunden oder voneinander getrennt werden. Die Kupplung 5 ist vorliegend in Form einer Reibungskupplung gestaltet, welche eine stufenlos variable Einstellung des zwischen dem Kupplungseingangsteil 6 und dem Kupplungsausgangsteil 7 übertragbaren Drehmoments ermöglicht. In geschlossenem Zustand ist die Welle 36 mit der Zwischenwelle 35 des Differentialgetriebes 4 zur Drehmomentübertragung verbunden. In offenem Zustand der Kupplung 5 ist die Welle 36 von dem Differentialgetriebe 4 mechanisch getrennt, so dass kein Drehmoment auf die Fahrzeugräder übertragen werden kann. Zwischen der Schließstellung und der Offenstellung kann die Kupplung 5 auf jede Zwischenstellung stufenlos eingestellt werden, so dass sich hiermit das auf die rechte und linke Welle 34, 36 übertragene Drehmoment einstellen und steuern lässt.

Die Reibungskupplung 5 umfasst einen Innenlamellenträger als Eingangsteil 6, mit dem Innenlamellen drehfest und axial beweglich verbunden sind, einen Außenlamellenträger als Ausgangsteil 7, mit dem Außenlamellen axial beweglich und drehfest verbunden sind. Die Außenlamellen und Innenlamellen sind axial abwechselnd angeordnet und bilden gemeinsam ein Lamellenpaket 37. Das Lamellenpaket 37 ist in eine erste axiale Richtung gegen eine Stützplatte 38 axial abgestützt. Die Stützplatte 38 ist bei der vorliegenden Ausführungsform einteilig mit dem Innenlamellenträger 6 gestaltet, ohne hierauf eingeschränkt zu sein. Zum Beaufschlagen des Lamellenpakets 37 ist eine Druckplatte 39 vorgesehen, welche von dem steuerbaren Aktuator 8 axial bewegbar ist.

Das von der Kupplung 5 zu übertragende Drehmoment kann beispielsweise in einer elektronischen Regeleinheit (ECU) auf Basis von fortlaufend sensierten Fahrzustandsgrößen des Kraftfahrzeugs ermittelt werden. Die elektronische Regeleinheit gibt ein entsprechendes Steuerungssignal an den Aktuator 8 weiter, welcher dann die Druckplatte 39 entsprechend beaufschlagt, so dass das gewünschte Drehmoment von der Kupplung 5 übertragen wird.

Zwischen dem Aktuator 8 und der Kupplung 5 ist ein Axiallager 42 vorgesehen, das eine axiale Kraftübertragung vom Aktuator 8 auf die Druckplatte 39 bei gleichzeitiger rotatorischer Entkopplung ermöglicht. Der Aktuator 8 umfasst vorliegend einen Kugelrampenmechanismus 43 und eine Antriebseinheit (nicht dargestellt). Der Kugelrampenmechanismus 43 weist einen Stützring 44 auf, der gegenüber einem Gehäuseteil 60 axial abgestützt und drehfest gehalten ist, sowie einen dem Stützring gegenüberliegenden und um die Drehachse A2 drehend antreibbaren Stellring 45. Der Stützring 44 ist mit einem inneren Sitz 46 auf dem Lager 68 aufgenommen. Der Stellring 45 ist über eine Getriebestufe 47 von einer Antriebsquelle drehend antreibbar, beispielsweise einem Elektromotor.

In den einander gegenüberliegenden Stirnflächen des Stützrings 44 und Stellrings 45 sind jeweils über dem Umfang verteilte Kugelrillen angeordnet, die eine variable Tiefe über dem Umfang aufweisen und in denen jeweils eine Kugel 41 aufgenommen ist. Zur Betätigung der Kugelrampeneinheit 43 wird der Stellring 45 gegenüber dem Stützring 44 über die Getriebestufe 47 verdreht. Die Getriebestufe umfasst ein von der Antriebsquelle antreibbares erstes Zahnrad und ein hiermit verbundenes Ritzel 48, das mit einer Außenverzahnung 49 des Stellrings 45 in Eingriff ist.

Wie insbesondere aus Figur 1H hervorgeht, ist das Betätigungselement 9 zum Betätigen des Ventils 19 fest mit dem drehbaren Stellring 45 verbunden, beziehungsweise einteilig mit diesem gestaltet. Die Betätigungskontur 11 des Betätigungselements 9 ist bei der vorliegenden Ausführungsform an einer Au ßenumfangsfläche ausgebildet, das heißt, das Ventil 19 ist im Wesentlichen radial beziehungsweise senkrecht relativ zur Drehachse A2 des Stellrings 45 ausgerichtet. Es versteht sich, dass auch eine andere Ausgestaltung möglich ist, beispielsweise, dass die Betätigungskontur des Betätigungselements an einer Stirnfläche des Stellrings ausgebildet ist. In diesem Fall wäre das Ventil im Wesentlichen parallel zur Drehachse A2 des Stellrings angeordnet.

Das Ventil 19 umfasst ein axial bewegliches Stellglied 20, das in einer Ventilkammer 21 axial beweglich einsitzt. Das Stellglied 20, das auch als Ventilkörper bezeichnet werden kann, kann von einer Feder 52 in Richtung des Betätigungselements 9 vorgespannt sein. Das Stellglied 20 umfasst einen ersten Abschnitt 53 mit insbesondere größerem Durchmesser, welcher zumindest eine Fluidmündung 55 zur Ventilkammer 21 verschließen oder freigeben kann, sowie einen zweiten Abschnitt 54 mit insbesondere kleinerem Durchmesser, dessen Ende mit der Betätigungskontur 11 des Betätigungselements 9 in Kontakt ist. Das Stellglied 20 ist über die Feder 52 gegen ein Stützelement 56 abgestützt, das die Ventilkammer nach außen hin verschließt. Hierfür ist das Stützelement 56 in Form eines in das Gehäuse 10 eingeschraubten Schraubkörpers gestaltet, gegen den die Feder 52 abgestützt ist. Durch Einstellen der Einschraubtiefe des Schraubkörpers kann die Federvorspannung eingestellt werden. Bei geöffneter Kupplung 5 ist das Stellglied 20 von der Betätigungskontur 11 des Betätigungselements 9 gegen die Vorspannkraft der Feder 52 nach radial außen gedrückt, so dass das Ventil 19 geschlossen ist. Zum Schließen der Kupplung 5 wird das Betätigungselement 9 verdreht (in Figur 1H gegen den Uhrzeigersinn), wobei das Stellglied 20 entlang der Betätigungskontur 11 abgleitet und von der Feder 52 nach radial innen gedrückt wird. Auf diese Weise gibt das Stellglied 20 die Fluidmündung 55 zur Ventilkammer 21 frei, so dass das Schmiermittel aus dem Reservoir 14 abläuft und die volle Schmiermittelmenge zur Verfügung steht.

Das Ventil 19 regelt den Schmiermittelfluss vom Reservoir 14 zum Kupplungsraum 15, wobei das Ventil 19 insbesondere in der hydraulischen Verbindung zwischen genannten Kammern 14, 15 angeordnet ist. Konkret kann sich ein erster Fluidkanal 16 von dem Reservoir 14 zur Ventilkammer 21 erstrecken und in diese münden. Ferner kann sich ein zweiter Fluidkanal 17 von der Ventilkammer 21 zum Kupplungsraum 15 erstrecken. Der zweite Fluidkanal 17 kann einen ersten Zweig 17A aufweisen, der in den Kupplungsraum 15 mündet, sowie optional einen zweiten Zweig 17B, der in den Getrieberaum 13 mündet. Durch Verschieben des Stellglieds 20 in der Ventilkammer 21 kann der Zulauf 16 vom Reservoir 14 und der Ablauf 17 wahlweise hydraulisch miteinander verbunden oder voneinander getrennt werden. Die Betätigung des Ventils 19 erfolgt automatisch über das Betätigungselement 9 beziehungsweise den Aktuator 8.

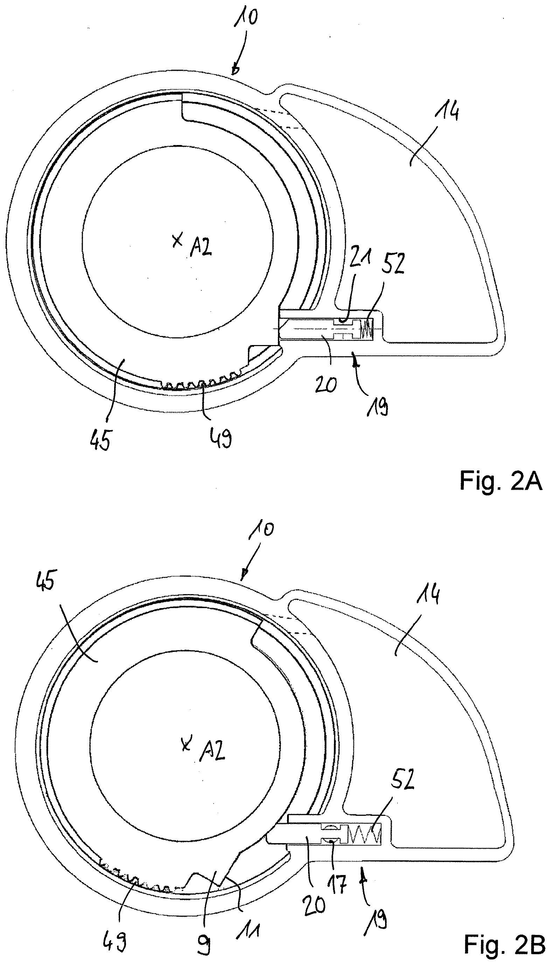

Durch Betätigung der Aktuator-Antriebsquelle wird der Stellring 45 relativ zum Stützring 44 verdreht. Je nach Drehrichtung der Antriebsquelle kann der Stellring 45 in eine erste Drehrichtung oder in die entgegengesetzte zweite Drehrichtung gedreht werden. In einem ersten Betriebsmodus sind die beiden Ringe 44, 45 aneinander axial angenähert. Dabei ist die Kupplung 5 vollständig geöffnet und das Ventil 19 vollständig geschlossen. Dieser Zustand ist in Figur 2A gezeigt.

Ausgehend von diesem Betriebszustand führt ein Verdrehen des Stellrings 45 relativ zum Stützring 44 dazu, dass die in den Kugelrillen gehaltenen Kugeln 41 in Bereiche geringerer Tiefe laufen, so dass der Stellring 45 axial in Richtung Kupplung 5 bewegt wird. Der Stellring 45 ist über das Axiallager 42 gegen die Druckplatte 39 axial abgestützt, welche entsprechend in Richtung Stützplatte 38 bewegt wird. Auf diese Weise wird die Kupplung 5 geschlossen und das Ventil 19 geöffnet. Dieser Zustand ist in Figur 2B gezeigt. Durch Beaufschlagen der Druckplatte 39 wird das Lamellenpaket 37 beaufschlagt, so dass ein Drehmoment zwischen Innenlamellenträger 6 und Außenlamellenträger 7 übertragen wird. In diesem Zustand steht die volle Schmiermittelmenge in der Antriebsanordnung 2 zur Verfügung, um alle drehenden Bauteile zu kühlen beziehungsweise zu schmieren.

Wird der Aktuator-Antrieb und damit der Stellring 45 wieder in die entgegengesetzte zweite Drehrichtung verdreht, laufen die in den Kugelrillen gehaltenen Kugeln wieder in Bereiche größerer Rillentiefe, wobei der Stellring 45 axial in Richtung Stützring 44 beaufschlagt beziehungsweise bewegt wird. Auf diese Weise wird die Kupplung 5 wieder geöffnet und das Ventil 19 geschlossen. Ein Teil der gesamten Schmiermittelmenge wird in dem Reservoir 14 zwischengespeichert, so dass die aktive Schmiermittelmenge in diesem Betriebszustand reduziert ist und Planschverluste vermindert werden.

Nachstehend werden weitere Einzelheiten des Gehäuses 10 beziehungsweise des Hydrauliksystems erläutert. Das Gehäuse 10 kann mehrere Gehäuseabschnitte aufweisen. Dabei sind vorliegend insbesondere drei Gehäuseteile 57, 58, 59 vorgesehen, ohne hierauf eingeschränkt zu sein. Ein zentrales Gehäuseteil 58 bildet eine Zwischenwand 60 zwischen dem Getrieberaum 13 und dem Kupplungsraum 15. Die Zwischenwand 60 weist eine Öffnung 61 auf, durch die sich die Zwischenwelle 35 hindurcherstreckt, die ein Ausgangsteil des Differentials 4 mit der Kupplung 5 antriebsmäßig verbindet. Die Zwischenwelle 35 ist in dem Differentialkorb 27 mittels eines Lagers 62 drehbar gelagert, wobei der Differentialkorb 27 wiederum mittels eines Lagers 63 in der Zwischenwand 60 drehbar gelagert ist. Mit seinem entgegengesetzten Endabschnitt ist der Differentialkorb 27 über ein zweites Lager 64 in dem deckelförmigen Gehäuseteil 57 drehbar gelagert.

Wie insbesondere in Figur 1G erkennbar ist, mündet die Fluidleitung 17 in einem Ringabschnitt 66 der Zwischenwand 60 axial benachbart zu einer Ringschulter 65. Auf diese Weise fließt das Schmiermittel in zur Schulter entgegengesetzte Richtung zum Aktuator 8 beziehungsweise der Kupplung 5, um hier die drehenden Bauteile zu kühlen beziehungsweise zu schmieren. Die Zwischenwelle 35 ist über eine Wellenverzahnung 67 (splines) drehfest mit dem Innenlamellenträger 6 verbunden. Der Innenlamellenträger 6 ist über ein erstes Lager 68 in der Zwischenwand 60 drehbar gelagert und über ein zweites Lager 69 an einem mit der Seitenwelle 36 verbundenen Hülsenteil 70 drehbar gelagert.

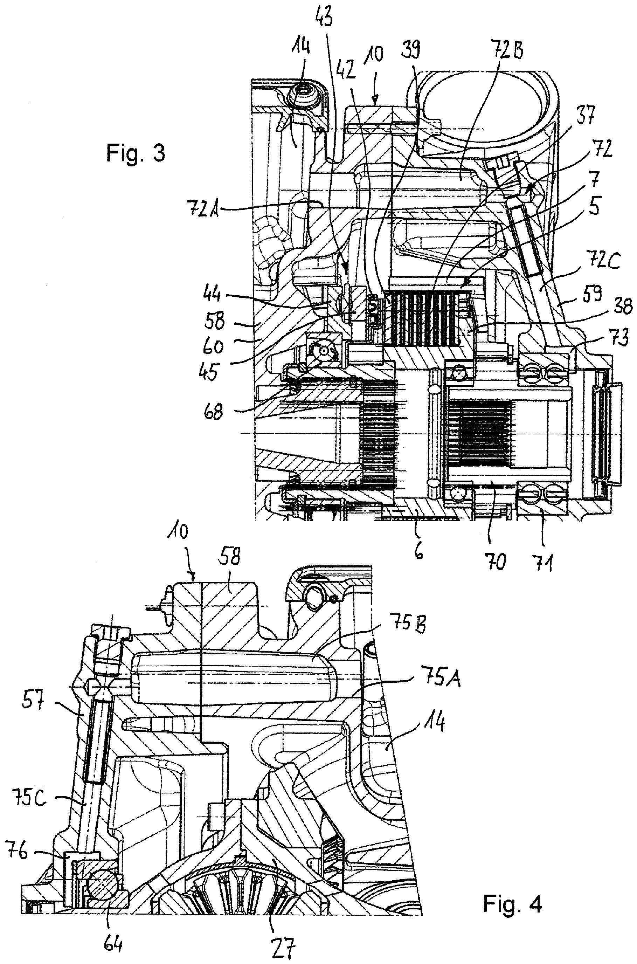

Wie insbesondere in Figur 3 erkennbar, ist das Hülsenteil 70 mittels eines Wellenlagers 71 in dem Gehäuse 10 drehbar gelagert. Zur Schmierung des Lagers 71 ist eine Fluidverbindung 72 vorgesehen, die das Reservoir 14 mit einer Mündung 73 im Bereich des Lagers 71 verbindet. Die Fluidverbindung 72 umfasst insbesondere mehrere Abschnitte 72A, 72B, 72C, die ineinander übergehen. Ein erster Abschnitt 72A ist als Bohrung in einer Wandung des Reservoirs 14 gestaltet, die in einen kammerartigen zweiten Abschnitt 72B mündet. Der Abschnitt 72B ist über den Leitungsabschnitt 72C mit der Mündung 73 verbunden.

Wie insbesondere in Figur 4 erkennbar, ist der Differentialkorb 27 an seiner vom Winkeltrieb 3 abgewandten Seite mittels des Wellenlagers 64 in dem Gehäuse 10 drehbar gelagert. Zur Schmierung des Lagers 64 ist eine Fluidverbindung 75 vorgesehen, die das Reservoir 14 mit einer Mündung 76 im Bereich des Lagers 64 verbindet. Die Fluidverbindung 75 umfasst insbesondere mehrere Abschnitte 75A, 75B, 75C, die ineinander übergehen. Ein erster Abschnitt 75A ist als Bohrung in der Wandung des Reservoirs 14 gestaltet, die in den kammerartigen zweiten Abschnitt 75B mündet. Der Abschnitt 75B ist über den Leitungsabschnitt 75C mit der Mündung 76 verbunden.

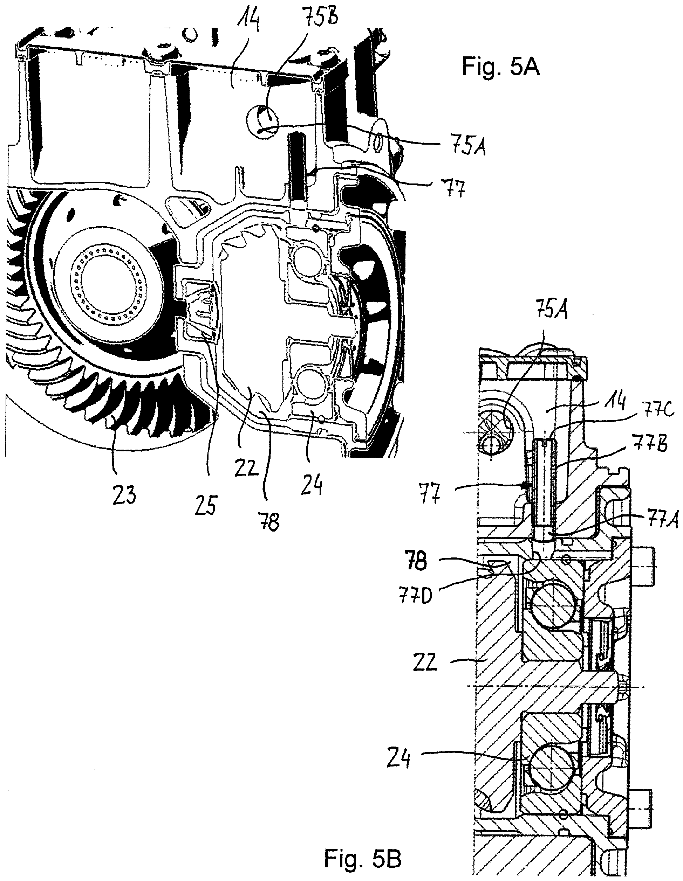

Die Figuren 5A und 5B zeigen ein weiteres vorteilhaftes Detail der Antriebsanordnung 2. Zur Schmierung der Lagerung 24, 25 des Ritzels 22 ist eine Fluidverbindung 77 vorgesehen, die das Reservoir 14 mit der Ritzelkammer 78 verbindet. Die Fluidverbindung 77 umfasst insbesondere eine Bohrung 77A in einer unteren Wandung des Reservoirs 14, in die eine Hülse 77B eingesetzt ist. Wenn der Pegel des in der Kammer befindlichen Schmiermittels das obere Ende 77C der Hülse 77B übersteigt, fließt das Schmiermittel durch die Hülse 77B und eine Bohrung 77A mit Öffnung 77D in die Ritzelkammer 78, um hier die drehenden Bauteile zu schmieren.

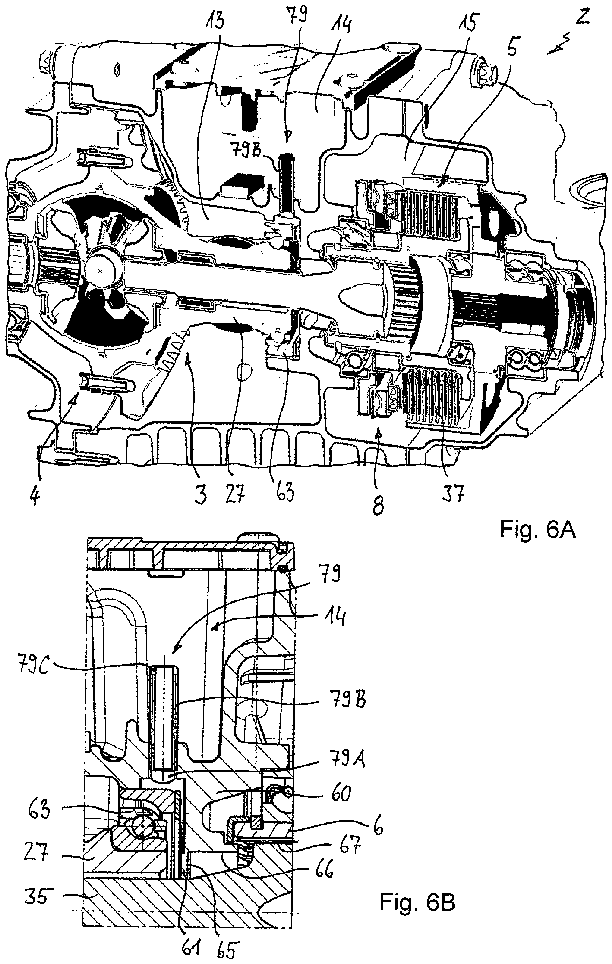

Die Figuren 6A und 6B zeigen ein weiteres vorteilhaftes Detail der Antriebsanordnung 2. Zur Schmierung der Lagerung 63 des Differentialkorbs 27 ist eine Fluidverbindung 79 vorgesehen, die das Reservoir 14 mit dem Getrieberaum 13 verbindet. Die Fluidverbindung 79 umfasst insbesondere eine Bohrung 79A in einer unteren Wandung des Reservoirs 14, in die eine Hülse 79B eingesetzt ist. Wenn der Pegel des in der Kammer befindlichen Schmiermittels das obere Ende 79C der Hülse 79B übersteigt, fließt das Schmiermittel durch die Hülse und die Bohrung in den Getrieberaum 13, um hier das Lager 63 und weitere drehende Bauteile zu schmieren.

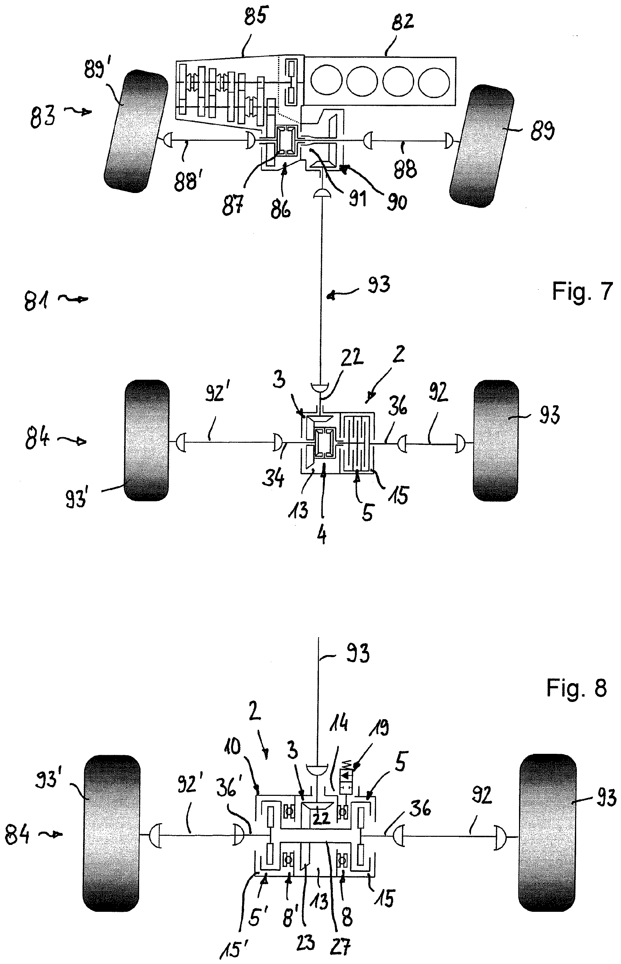

Figur 7 zeigt eine Antriebsstranganordnung 81 für ein mehrachsgetriebenes Kraftfahrzeug mit einer erfindungsgemäßen Antriebsanordnung 2. Die Antriebsstranganordnung 81 umfasst eine Antriebsquelle 82, einen von der Antriebsquelle antreibbaren ersten Antriebsstrang mit einer ersten Antriebsachse 83 und einen zweiten Antriebsstrang mit einer zweiten Antriebsachse 84. Die Antriebsquelle 82 ist vorliegend in Form eines Verbrennungsmotors gestaltet und treibt über ein Stufengetriebe 85 ein Leistungsverzweigungseinheit 86 (Power Take-off Unit) an, über welches Drehmoment in den ersten beziehungsweise zweiten Antriebsstrang eingeleitet wird.

Der erste Antriebsstrang umfasst ein Differentialgetriebe 87, über welches ein eingeleitetes Drehmoment auf die beiden Seitenwellen 88, 88' übertragen wird, um die zugehörigen Räder 89, 89' anzutreiben. Die Seitenwellen 88, 88' umfassen jeweils ein getriebeseitiges und ein radseitiges Gleichlaufgelenk, welche jeweils eine Drehmomentübertragung unter Winkelbewegungen ermöglichen.

Der zweite Antriebsstrang kann permanent angetrieben werden (permanenter Allradantrieb) oder mittels einer im Leistungspfad angeordneten Kupplung 91 bei Bedarf zuschaltbar gestaltet sein (On-Demand-Antrieb). Der zweite Antriebsstrang umfasst eine Längsantriebswelle 93, mit der Drehmoment auf das Eingangsteil 22 der erfindungsgemäßen Antriebsanordnung 2 übertragen werden kann. Die Längsantriebswelle 93 kann in Form einer mehrteiligen Welle gestaltet sein, die einen vorderen Winkeltrieb 90 mit dem Eingangsteil 22 der Antriebsanordnung 2 verbindet. Die Ausgangsteile 34, 36 der Antriebsanordnung 2 sind jeweils mit einer Seitenwelle 92, 92` antriebsverbunden, um Drehmoment auf die zugehörigen Räder 93, 93' zu übertragen. Das auf die Antriebsachse 84 übertragbare Antriebsmoment kann mittels der Kupplung 5 eingestellt werden, und zwar variabel in Abhängigkeit vom ermittelten Bedarf (Solldrehmoment). Bei vollständig geöffneter Kupplung 5 sind die Seitenwellen 92, 92` beziehungsweise die zugehörige Antriebsachse 84 antriebsmäßig vom Antrieb abgekoppelt. In diesem Betriebsmodus wird das Reservoir 14 mit Schmiermittel gefüllt, so dass der Schmiermittelpegel im Getrieberaum 13 und damit die Planschverluste insgesamt reduziert sind.

Die Figur 8 zeigt eine erfindungsgemäße Antriebsanordnung in einer zweiten Ausführungsform. Die vorliegende Ausführungsform entspricht hinsichtlich Aufbau und Funktionsweise weitgehend derjenigen gemäß den Figuren 1 bis 7, so dass hinsichtlich der Gemeinsamkeiten abkürzend auf die obige Beschreibung Bezug genommen wird. Dabei sind gleiche beziehungsweise einander entsprechende Einzelheiten mit den gleichen Bezugszeichen versehen wie in den Figuren 1 bis 7.

Ein Unterschied ist, dass bei der vorliegenden Ausführungsform zwei Kupplungen 5, 5' vorgesehen sind, mit denen die Drehmomentübertragung und -verteilung auf die beiden Seitenwellen 92, 92` gesteuert wird. Die Kupplungen 5, 5' sind jeweils über einen zugehörigen Aktuator 8, 8' individuell ansteuerbar. Die Aktuatoren 8, 8' beziehungsweise Kupplungen 5, 5' sind hinsichtlich der Funktionsweise so gestaltet wie die entsprechenden Komponenten der obigen Ausführungsform, auf die zur Vermeidung von Wiederholungen verwiesen wird. Ein Achsdifferential ist bei der vorliegenden Ausführungsform nicht vorgesehen.

Die Antriebsanordnung 2 umfasst den Winkeltrieb 3, in den Drehmoment von einer Längsantriebswelle 93 eingeleitet werden kann. Der dem Winkeltrieb 3 beziehungsweise der Längsantriebswelle 93 im Leistungspfad vorgelagerte Teil des Antriebsstranges kann beispielsweise so ausgestaltet sein, wie bei der Ausführungsform gemäß Figur 7. Das Tellerrad 23 des Winkeltriebs 3 ist mit den beiden Kupplungseingangsteilen 6, 6' antriebsverbunden, um diese gemeinsam mit derselben Drehzahl anzutreiben. Die Kupplungsausgangsteile 7, 7' sind mit der jeweils zugehörigen Seitenwelle 92, 92' verbunden, um diese anzutreiben. Die Kupplungseingangsteile 6, 6' sind bei der vorliegenden Ausführungsform als Außenlamellenträger gestaltet. Entsprechend sind die Kupplungsausgangsteile 7, 7' als Innenlamellenträger gestaltet.

Einer der Aktuatoren 8 ist mit dem Ventil 19 wirkverbunden, das bei im Schließsinn betätigter Kupplung 5 geöffnet ist, so dass Schmiermittel vom Reservoir 14 zum Gehäuseraum 13 fließt, und bei unbetätigter Kupplung 5 geschlossen ist, so dass Schmiermittel im Reservoir 14 gespeichert wird. Das Ventil 19 kann bei der vorliegenden Ausführungsform einen Schmiermittelfluss zum Getriebegehäuseraum 13, zum ersten Kupplungsraum 15 und zum zweiten Kupplungsraum 15' steuern. An der zweiten Kupplung 6' ist entsprechend kein Ventil vorgesehen, wobei auch eine Ausführung mit zwei Ventilen - einem je Aktuator - möglich wäre.

Neben der Trennfunktion des Antriebsstrangs (Disconnect) hat die vorliegende Ausführungsform mit zwei Kupplungen 5, 5' als weitere Besonderheit, dass die Drehmomentverteilung zwischen der rechten Seitenwelle 92 und der linken Seitenwelle 92` individuell eingestellt und gesteuert werden kann. Eine solche Ausführungsform mit einer Kupplung je Seitenwelle wird auch als "Twinster" bezeichnet.

### Bezugszeichen

- 2: Antriebsanordnung
- 3: Getriebe
- 4: Getriebe
- 5: Kupplung
- 6: Kupplungseingangsteil
- 7: Kupplungsausgangsteil
- 8: Aktuator
- 9: Betätigungselement
- 10: Gehäuse
- 11: Betätigungskontur
- 12: Fluidkanal
- 13: Getriebegehäuseraum
- 14: Reservoir
- 15: Kupplungsgehäuseraum
- 16: Fluidkanal
- 17: Fluidkanal
- 18: Fluidkanal
- 19: Ventil
- 20: Stellglied
- 21: Ventilkammer
- 22: erstes Zahnrad
- 23: zweites Zahnrad
- 24: Lager
- 25: Lager
- 26: Wellenverzahnung
- 27: Eingangsteil
- 28: Ausgangsteil
- 29: Ausgangsteil
- 30: Differentialräder
- 32: Seitenwellenrad
- 33: Seitenwellenrad
- 34: Seitenwelle
- 35: Zwischenwelle
- 36: Seitenwelle
- 37: Lamellenpaket
- 38: Stützplatte
- 39: Druckplatte
- 42: Axiallager
- 43: Kugelrampenmechanismus
- 44: Stützring
- 45: Stellring
- 46: Sitz
- 47: Getriebestufe
- 48: Ritzel
- 52: Feder
- 53: erster Abschnitt
- 54: zweiter Abschnitt
- 55: Fluidmündung
- 56: Stützelement
- 57: Gehäuseteil
- 58: Gehäuseteil
- 59: Gehäuseteil
- 60: Zwischenwand
- 62: Lager
- 63: Lager
- 64: Lager
- 65: Ringschulter
- 66: Ringabschnitt
- 67: Wellenverzahnung
- 68: Lager
- 69: Lager
- 70: Hülsenteil
- 71: Wellenlager
- 72: Fluidverbindung
- 73: Mündung
- 74: Wellenlager
- 75: Fluidverbindung
- 76: Mündung
- 77: Fluidverbindung
- 78: Kammer
- 79: Fluidverbindung
- 81: Antriebsstranganordnung
- 82: Antriebsquelle
- 83: Antriebsachse
- 84: Antriebsachse
- 85: Schaltgetriebe
- 86: Verteilergetriebe
- 87: Differentialgetriebe
- 88: Seitenwelle
- 89: Rad
- 90: Winkeltrieb
- 91: Kupplung
- 92, 92': Seitenwelle
- 93: Rad

- A: Achse

## Patentansprüche

1. Antriebsanordnung für ein Kraftfahrzeug, umfassend:
ein Getriebe (3),
zumindest eine Kupplung (5), die mit dem Getriebe (3) antriebsverbunden ist und zur variablen Drehmomentübertragung zwischen einem Kupplungseingangsteil (6) und einem Kupplungsausgangsteil (7) gestaltet ist,
einen Aktuator (8) zur Steuerung der Kupplung (5), wobei der Aktuator (8) ein Betätigungselement (9) aufweist, das auf die Kupplung (5) zur Einstellung des übertragbaren Drehmoments einwirkt,
ein Gehäuse (10) mit einem Getriebegehäuseraum (13), in dem das Getriebe aufgenommen ist, einem Reservoir (14), in dem Schmiermittel speicherbar ist, und einem Kupplungsgehäuseraum (15), in dem die Kupplung (5) aufgenommen ist,
**dadurch gekennzeichnet,**
**dass** bei Betrieb aufgrund von Drehbewegung Schmiermittel von zumindest einem drehenden Bauteil des Getriebes (3) von dem Getriebegehäuseraum (13) in das Reservoir (14) gefördert wird,
wobei ein Ventil (19) zur Steuerung eines Schmiermittelstroms von dem Reservoir (14) zu mindestens einem von dem Getriebegehäuseraum (13) und dem Kupplungsgehäuseraum (15) vorgesehen ist, wobei das Ventil (19) ein von dem Aktuator (8) verstellbares und mittels einer Feder (52) gegen das Betätigungselement (9) des Aktuators (8) vorgespanntes Stellglied (20) aufweist und mit dem Betätigungselement (9) des Aktuators (8) derart wirkverbunden ist, dass das Ventil (19) bei im Schließsinn betätigter Kupplung (5) geöffnet ist, so dass Schmiermittel vom Reservoir (14) zu dem mindestens einen von dem Getriebegehäuseraum (13) und dem Kupplungsgehäuseraum (15) fließt, und bei unbetätigter Kupplung geschlossen ist, so dass Schmiermittel im Reservoir (14) gespeichert wird und die im Getriebegehäuseraum (13) zirkulierende Schmiermittelmenge reduziert wird, und wobei das Betätigungselement (9) das Stellglied (20) beim Schließen der Kupplung (5) freigibt, so dass das Stellglied (20) von der Feder (52) in die Offenstellung überführt und eine Fluidverbindung (16, 17) geöffnet wird.

2. Antriebsanordnung nach Anspruch 1,
**dadurch gekennzeichnet,**
**dass** ein Verbindungskanal (12) vom Getriebegehäuseraum (13) zum Reservoir (14) vorgesehen ist, wobei im Einbauzustand die Mündung (12A) des Verbindungskanals (12) in das Reservoir (14) auf einem höheren Niveau liegt, als die Mündung (16A) eines Verbindungskanals (16) aus dem Reservoir (14).

3. Antriebsanordnung nach Anspruch 2,
**dadurch gekennzeichnet,**
**dass** das Getriebe (3) ein Winkeltrieb ist und ein drehend antreibbares Ritzel (22) sowie ein hiermit kämmendes Ringrad (23) umfasst, das in dem Getriebegehäuse (10) um eine Drehachse (A2) drehbar gelagert ist, wobei in dem Getriebegehäuseraum (13) eine Auffangeinrichtung vorgesehen ist, die ausgestaltet ist, um vom Ringrad (23) abgeschleudertes Schmiermittel aufzufangen und dem Verbindungskanal (12) zuzuführen.

4. Antriebsanordnung nach einem der Ansprüche 1 bis 3,
**dadurch gekennzeichnet,**
**dass** das Gehäuse (10) eine Zwischenwand (60) zwischen dem Getriebegehäuseraum (13) und dem Kupplungsgehäuseraum (15) aufweist, wobei die Zwischenwand (60) eine Durchtrittsöffnung (61) aufweist, durch die sich eine Zwischenwelle (35) axial hindurcherstreckt, die das Getriebe (3) mit der Kupplung (5) antriebsmäßig verbindet,
wobei die Fluidverbindung (17) vom Reservoir (14) zum Kupplungsgehäuseraum (15) in einem Ringabschnitt (61) der Zwischenwand (60) axial benachbart zu einer Schulter (65) in den Kupplungsgehäuseraum (15) mündet.

5. Antriebsanordnung nach Anspruch 4,
**dadurch gekennzeichnet,**
**dass** der Aktuator (8) koaxial zur Zwischenwelle (35) und axial zwischen der Zwischenwand (60) und der Kupplung (5) angeordnet ist.

6. Antriebsanordnung nach einem der Ansprüche 1 bis 5,
**dadurch gekennzeichnet,**
**dass** der Aktuator (8) einen Rampenmechanismus (43) umfasst mit einem Stützring (44), der gegen ein ortsfestes Bauteil (10) axial abgestützt ist, und einem Stellring (45), der axial verschiebbar ist, sowie eine Antriebseinheit zum Verdrehen eines von dem Stützring (44) und dem Stellring (45) relativ zum anderen von dem Stützring (44) und dem Stellring (45), wobei der Stützring (44) und der Stellring (45) eine Rampenstruktur aufweisen, so dass eine Drehbewegung der Antriebseinheit in eine Axialbewegung des Stellrings (45) umgewandelt wird.

7. Antriebsanordnung nach Anspruch 6,
**dadurch gekennzeichnet,**
**dass** der von der Antriebseinheit drehend antreibbare Ring, nämlich der Stutzring (44) oder der Stellring (45), das mit dem Stellglied (20) des Ventils (19) zusammenwirkende Betätigungselement (9) ist.

8. Antriebsanordnung nach einem der Ansprüche 1 bis 7,
**dadurch gekennzeichnet,**
**dass** das bewegbare Betätigungselement (9) eine Stellkontur (11) aufweist, die so gestaltet ist, dass ein Bewegen des Betätigungselements (9) zum Schließen der Kupplung (5) ein Bewegen des Stellglieds (20) zum Öffnen des Ventils (19) bewirkt.

9. Antriebsanordnung nach einem der Ansprüche 1 bis 8,
**dadurch gekennzeichnet**,
ein Differentialgetriebe (4) in dem Getriebegehäuseraum (14) angeordnet ist, das einen mit dem Ringrad (23) verbundenen Differentialkorb (27) aufweist, der in dem Getriebegehäuse (10) um die Drehachse (A2) drehbar gelagert ist, mehrere Differentialräder (30), die in dem Differentialkorb (27) drehbar gelagert sind und gemeinsam mit diesem um die Drehachse (A2) umlaufen, sowie zwei Seitenwellenräder (32, 33), die jeweils koaxial zur Drehachse (A2) angeordnet sind und mit den Differentialrädern (30) in Verzahnungseingriff sind, wobei ein kupplungsseitiges Ende des Differentialkorbs (27) in der Zwischenwand (60) drehbar gelagert ist.

10. Antriebsanordnung nach einem der Ansprüche 1 bis 9,
**dadurch gekennzeichnet,**
**dass** das Volumen des Reservoirs (14) so groß ist, dass es mindestens 25 % des gesamten Schmiermittelvolumens der Antriebsanordnung zwischenspeichern kann.

11. Antriebsanordnung nach einem der Ansprüche 1 bis 10,
**dadurch gekennzeichnet,**
**dass** das Volumen des Reservoirs (14) so groß ist, dass es maximal 75 % des gesamten Schmiermittelvolumens der Antriebsanordnung zwischenspeichern kann.

12. Antriebsanordnung nach einem der Ansprüche 1 bis 11,
**dadurch gekennzeichnet,**
**dass** das Reservoir (14) im Einbauzustand auf einem höheren Niveau angeordnet ist, als ein Schmiermittelsumpf des Getriebes (3),
wobei eine Fluidverbindung (79) vom Reservoir (14) zum Getriebegehäuseraum (13) vorgesehen ist, wobei eine Mündung (79A) der Fluidverbindung (79) oberhalb eines Bodens des Reservoirs (14) angeordnet ist, so dass Schmiermittel im Reservoir (14) zwischenspeicherbar ist.

13. Antriebsanordnung nach einem der Ansprüche 1 bis 12,
**dadurch gekennzeichnet,**
**dass** die Kupplung (5) als nasslaufende Reiblamellenkupplung gestaltet ist und einen Innenlamellenträger (6) aufweist, mit dem Innenlamellen drehfest und axial beweglich verbunden sind, und einen Außenlamellenträger (7), mit dem Außenlamellen drehfest und axial beweglich verbunden sind, wobei die Innenlamellen und die Außenlamellen gemeinsam ein Lamellenpaket (37) bilden, wobei der Innenlamellenträger (6) in einem axialen Überdeckungsbereich mit dem Lamellenpaket (37) zumindest eine Bohrung aufweist, durch welche Schmiermittel zum Lamellenpaket (37) fließen kann.

14. Antriebsanordnung nach einem der Ansprüche 1 bis 13,
**dadurch gekennzeichnet,**
**dass** eine zweite Kupplung (5') vorgesehen ist, die mit dem Getriebe (3) antriebsverbunden ist und zur variablen Drehmomentübertragung zwischen einem zweiten Kupplungseingangsteil (6') und einem zweiten Kupplungsausgangsteil (7') gestaltet ist, und
ein zweiter Aktuator (8') zur Steuerung der zweiten Kupplung (5').

## Claims

1. Drive assembly for a motor vehicle, comprising:
a transmission (3),
at least one clutch (5) which is drivingly connected with the transmission (3) and is configured for variably transmitting torque between a clutch input part (6) and a clutch output part (7),
an actuator (8) for controlling the clutch (5), wherein the actuator (8) comprises an actuating element (9) which acts on the clutch (5) to adjust a transmittable torque,
a housing (10) with a transmission housing chamber (13) in which the transmission is accommodated, a reservoir (14) in which lubricant is storable, and a clutch housing chamber (15) in which the clutch (5) is accommodated,
**characterised in**
**that** due to rotational movement during operation, lubricant is conveyed by at least one rotary component of the transmission (3) from the transmission housing chamber (13) into the reservoir (14),
wherein a valve (19) is provided for controlling a lubricant flow from the reservoir (14) to at least one of the transmission housing chamber (13) and the clutch housing chamber (15), wherein the valve (19) comprises a control element (20) movable by the actuator (8) and pretensioned against the actuating element (9) of the actuator (8) by a spring (52) and is operatively connected to the actuating element (9) of the actuator (8) in such a way that, when the clutch (5) is actuated to be closed, the valve (19) is open so that lubricant flows from the reservoir (14) to the at least one of the transmission housing chamber (13) and the clutch housing chamber (15), and when the clutch is not actuated, the valve (19) is closed so that lubricant is stored in the reservoir (14) and the amount of lubricant circulating in the transmission housing chamber (13) is reduced, and wherein the actuating element (9) releases the control element (20) when the clutch (5) is closed, so that the control element (20) is transferred into the open position by the spring (52) and a fluid connection (16, 17) is opened.

2. Drive assembly according to claim 1,
**characterised in**
**that** a connecting channel (12) is provided from the transmission housing chamber (13) to the reservoir (14), wherein in an installed condition the opening (12A) of the connecting channel (12) into the reservoir (14) is at a higher level than an opening (16A) of a connecting channel (16) out of the reservoir (14).

3. Drive assembly according to claim 2,
**characterised in**
**that** the transmission (3) is an angle drive and comprises a rotatingly drivable pinion (22) and a ring gear (23) engaging the pinion (22) and being rotatably supported in the transmission housing (10) about an axis of rotation (A2), wherein a catching device is provided in the transmission housing chamber (13), which catching device is configured to catch lubricant thrown off the ring gear (23) and to feed the lubricant to the connecting channel (12).

4. Drive assembly according to any one of claims 1 to 3,
**characterised in**
**that** the housing (10) has an intermediate wall (60) between the transmission housing chamber (13) and the clutch housing chamber (15), wherein the intermediate wall (60) has a through-opening (61) through which an intermediate shaft (35) extends, which drivingly connects the transmission (3) with the clutch (5),
wherein the fluid connection (17) from the reservoir (14) to the clutch housing chamber (15) opens into the clutch housing chamber (15) in a ring portion (61) of the intermediate wall (60) axially adjacent to a shoulder (65).

5. Drive assembly according to claim 4,
**characterised in**
**that** the actuator (8) is arranged coaxially to the intermediate shaft (35) and axially between the intermediate wall (60) and the clutch (5).

6. Drive assembly according to any one of claims 1 to 5,
**characterised in**
**that** the actuator (8) comprises a ramp mechanism (43) with a supporting ring (44), which is axially supported against a stationary component, and with a setting ring (45), which is axially displaceable, and a drive unit for rotatingly driving one of the supporting ring (44) and the setting ring (45) relative to the other one of the supporting ring (44) and the setting ring (45), wherein the supporting ring (44) and the setting ring (45) comprise a ramp structure so that a rotational movement of the drive unit is converted into an axial movement of the setting ring (45).

7. Drive assembly according to claim 6,
**characterised in**
**that** the ring rotatingly drivable by the drive unit, i. e. the supporting ring (44) or the setting ring (45), is the actuating element (9) which interacts with the control element (20) of the valve (19).

8. Drive assembly according to any one of claims 1 to 7,
**characterised in**
**that** the movable actuating element (9) comprises a setting contour (11) which is formed such that moving the actuating element (9) to close the clutch (5) causes the control element (20) to move for opening the valve (19).

9. Drive assembly according to any one of claims 1 to 8,
**characterised in**
**that** a differential drive (4) is arranged in the transmission housing chamber (14), which differential drive (4) comprises a differential carrier (27) connected to the ring gear (23) and rotatably supported in the housing (10) about the axis of rotation (A2), a plurality of differential gears (30) rotatably supported in the differential carrier (27) and jointly rotating with same about the axis of rotation (A2), as well as two sideshaft gears (32, 33) each arranged coaxially to the axis of rotation (A2) and engaging the differential gears (30), wherein a clutch-sided end of the differential carrier (27) is rotatably supported in the intermediate wall (60).

10. Drive assembly according to any one of claims 1 to 9,
**characterised in**
**that** a volume of the reservoir (14) is so large that it can temporarily store at least 25% of a total lubricant volume of the drive assembly.

11. Drive assembly according to any one of claims 1 to 10,
**characterised in**
**that** a volume of the reservoir (14) is so large that it can temporarily store at most 75% of the total lubricant volume of the drive assembly.

12. Drive assembly according to any one of claims 1 to 11,
**characterised in**
**that** in an installed condition, the reservoir (14) is arranged at a higher level than a lubricant sump of the transmission (3),
wherein a fluid connection (79) is provided from the reservoir (14) to the transmission housing chamber (13), wherein an opening (79A) of the fluid connection (79) is arranged above a base of the reservoir (14) so that lubricant can be temporarily stored in the reservoir (14).

13. Drive assembly according to any one of claims 1 to 12,
**characterised in**
**that** the clutch (5) is configured as a multi-plate wet clutch and has an inner plate carrier (6), to which inner plates are connected in a rotationally fixed and axially movable manner, and an outer plate carrier (7), to which outer plates are connected in a rotationally fixed and axially movable manner, wherein the inner plates and the outer plates together form a plate packet (37), wherein the inner plate carrier (6) comprises at least one bore in an axial overlap region with the plate packet (37), through which lubricant can flow to the plate packet (37).

14. Drive assembly according to any one of claims 1 to 13,
**characterised in**
**that** a second clutch (5') is provided which is drivingly connected with the transmission (3) and is configured for variably transmitting torque between a second clutch input part (6') and a second clutch output part (7'), and
a second actuator (8') for controlling the second clutch (5').

## Revendications

1. Agencement d'entraînement pour un véhicule à moteur, comprenant :
une transmission (3),
au moins un embrayage (5) qui est relié en entraînement à la transmission (3) et est conçu pour le transfert de couple de rotation variable entre une partie d'entrée d'embrayage (6) et une partie de sortie d'embrayage (7),
un actionneur (8) pour commander l'embrayage (5), dans lequel l'actionneur (8) présente un élément d'actionnement (9) qui agit sur l'embrayage (5) pour régler le couple de rotation pouvant être transféré,
un carter (10) comprenant un espace de carter de transmission (13) dans lequel la transmission est reçue, un réservoir (14) dans lequel du lubrifiant peut être stocké, et un espace de carter d'embrayage (15) dans lequel l'embrayage (5) est reçu,
**caractérisé en ce que**
lors du fonctionnement du fait du mouvement de rotation, du lubrifiant est transporté d'au moins une partie rotative de la transmission (3) de l'espace de carter de transmission (13) jusque dans le réservoir (14),
dans lequel une soupape (19) pour commander un écoulement de lubrifiant du réservoir (14) vers au moins un de l'espace de carter de transmission (13) et de l'espace de carter d'embrayage (15) est prévue, dans lequel la soupape (19) présente un membre de réglage (20) réglable par l'actionneur (8) et précontraint contre l'élément d'actionnement (9) de l'actionneur (8) au moyen d'un ressort (52) et est ainsi reliée en coopération avec l'élément d'actionnement (9) de l'actionneur (8) que la soupape (19) est ouverte lorsque l'embrayage (5) est actionné dans le sens de fermeture, de façon à ce que du lubrifiant s'écoule du réservoir (14) vers l'au moins un de l'espace de carter de transmission (13) et de l'espace de carter d'embrayage (15), et est fermée lorsque l'embrayage n'est pas actionné, de façon à ce que du lubrifiant soit stocké dans le réservoir (14) et la quantité de lubrifiant circulant dans l'espace de carter de transmission (13) est réduite, et dans lequel l'élément d'actionnement (9) libère le membre de réglage (20) lors de la fermeture de l'embrayage (5) de façon à ce que le membre de réglage (20) passe à la position ouverte par le ressort (52) et qu'une liaison fluidique (16, 17) soit ouverte.

2. Agencement d'entraînement selon la revendication 1,
**caractérisé en ce**
**qu'**un canal de liaison (12) est prévu de l'espace de carter de transmission (13) vers le réservoir (14), dans lequel dans l'état monté, l'embouchure (12A) du canal de liaison (12) repose dans le réservoir (14) à un niveau plus élevé que l'embouchure (16A) d'un canal de liaison (16) sortant du réservoir (14).

3. Agencement d'entraînement selon la revendication 2,
**caractérisé en ce**
**que** la transmission (3) est un renvoi d'angle et comprend un pignon (22) pouvant être entraîné en rotation ainsi qu'une couronne planétaire (23) s'engrenant avec celui-ci qui est positionnée en rotation sur un pivot (A2) dans le carter de transmission (10), dans lequel un dispositif récupérateur est prévu dans l'espace de carter de transmission (13) qui est conçu pour récupérer du lubrifiant turbiné par la couronne planétaire (23) et l'amener vers le canal de liaison (12).

4. Agencement d'entraînement selon l'une des revendications 1 à 3, **caractérisé en ce que** le carter (10) présente une paroi intermédiaire (60) entre l'espace de carter de transmission (13) et l'espace de carter d'embrayage (15), dans lequel la paroi intermédiaire (60) présente une ouverture traversante (61) à travers laquelle un arbre intermédiaire (35) s'étend axialement qui relie la transmission (3) à l'embrayage (5) en entraînement, dans lequel la liaison fluidique (17) du réservoir (14) à l'espace de carter d'embrayage (15) débouche dans un tronçon annulaire (61) de la paroi intermédiaire (60) dans le voisinage axial d'un épaulement (65) dans l'espace de carter d'embrayage (15).

5. Agencement d'entraînement selon la revendication 4,
**caractérisé en ce**
**que** l'actionneur (8) est disposé coaxialement à l'arbre intermédiaire (35) et axialement entre la paroi intermédiaire (60) et l'embrayage (5).

6. Agencement d'entraînement selon l'une des revendications 1 à 5,
**caractérisé en ce que**
l'actionneur (8) comprend un mécanisme de rampe (43) avec une bague d'appui (44) qui est appuyée axialement contre une pièce fixe (10), et une bague de réglage (45) qui peut être déplacée axialement, ainsi qu'une unité d'entraînement pour faire tourner une de la bague d'appui (44) et de la bague de réglage (45) l'une par rapport à l'autre de la bague d'appui (44) et de la bague de réglage (45), dans lequel la bague d'appui (44) et la bague de réglage (45) présentent une structure de rampe de façon à ce qu'un mouvement de rotation de l'unité d'entraînement soit converti en mouvement axial de la bague de réglage (45).

7. Agencement d'entraînement selon la revendication 6,
**caractérisé en ce que**
la bague pouvant être entraînée en rotation par l'unité d'entraînement, à savoir la bague d'appui (44) ou la bague de réglage (45), est l'élément d'actionnement (9) coopérant avec le membre de réglage (20) de la soupape (19) .

8. Agencement d'entraînement selon l'une des revendications 1 à 7,
**caractérisé en ce que**
l'élément d'actionnement (9) mobile présente un contour de réglage (11) qui est ainsi conçu qu'un mouvement de l'élément d'actionnement (9) pour fermer l'embrayage (5) a pour effet un déplacement du membre de réglage (20) pour ouvrir la soupape (19).

9. Agencement d'entraînement selon l'une des revendications 1 à 8,
**caractérisé en ce**
**qu'**un engrenage différentiel (4) est disposé dans l'espace de carter de transmission (14) qui présente une cage de différentiel (27) reliée à la couronne planétaire (23) qui est disposée rotative sur le pivot (A2) dans le carter de transmission (10), plusieurs roues de différentiel (30) qui sont disposées rotatives dans la cage de différentiel (27) et passent autour du pivot (A2) conjointement avec celle-ci, ainsi que deux roues d'arbre latéral (32, 33) qui sont disposées respectivement coaxialement au pivot (A2) et sont en engrènement avec les roues de différentiel (30), dans lequel une extrémité côté embrayage de la cage de différentiel (27) est disposée rotative dans la paroi intermédiaire (60).

10. Agencement d'entraînement selon l'une des revendications 1 à 9,
**caractérisé en ce**
**que** le volume du réservoir (14) est de taille à permettre un stockage intermédiaire d'au moins 25 % du volume total de lubrifiant de l'agencement d'entraînement.

11. Agencement d'entraînement selon l'une des revendications 1 à 10,
**caractérisé en ce**
**que** le volume du réservoir (14) est de taille à permettre un stockage intermédiaire maximal de 75 % du volume total de lubrifiant de l'agencement d'entraînement.

12. Agencement d'entraînement selon l'une des revendications 1 à 11,
**caractérisé en ce**
**que** le réservoir (14) dans l'état monté, est disposé à un niveau plus élevé qu'un bac récupérateur de lubrifiant de la transmission (3),
dans lequel une liaison fluidique (79) du réservoir (14) vers l'espace de carter de transmission (13) est prévue, dans lequel une embouchure (79A) de la liaison fluidique (79) est disposée au-dessus du fond du réservoir (14) de façon à ce que du lubrifiant puisse être stocké de manière intermédiaire dans le réservoir (14) .

13. Agencement d'entraînement selon l'une des revendications 1 à 12,
**caractérisé en ce**
**que** l'embrayage (5) est conçu en tant qu'embrayage multi-disques humide à friction et présente un support de disques intérieurs (6) avec lequel des disques intérieurs sont reliés fixes en rotation et mobiles axialement, et un support de disques extérieurs (7) avec lequel des disques extérieurs sont reliés fixes en rotation et mobiles axialement, dans lequel les disques intérieurs et les disques extérieurs forment ensemble un paquet de disques (37), dans lequel le support de disques intérieurs (6) présente au moins un perçage dans une zone de recouvrement axial avec le paquet de disques (37), à travers lequel du lubrifiant peut s'écouler en direction du paquet de disques (37).

14. Agencement d'entraînement selon l'une des revendications 1 à 13,
**caractérisé en ce**
**qu'**un second embrayage (5') est prévu qui est relié en entraînement avec la transmission (3) et est conçu pour la transmission de couple de rotation variable entre une deuxième partie d'entrée d'embrayage (6') et une deuxième partie de sortie d'embrayage (7'), et
un second actionneur (8') pour commander le second embrayage (5').
